(19) **Europäisches Patentamt**
**European Patent Office**
**Office européen des brevets**

(11) **EP 2 114 631 B1**

(12) **EUROPEAN PATENT SPECIFICATION**

(45) Date of publication and mention
of the grant of the patent:
**03.03.2021 Bulletin 2021/09**

(51) Int Cl.:
**B25J 9/16** $^{(2006.01)}$

(21) Application number: **08713029.0**

(86) International application number:
**PCT/US2008/000189**

(22) Date of filing: **07.01.2008**

(87) International publication number:
**WO 2008/085937 (17.07.2008 Gazette 2008/29)**

(54) **METHOD AND SYSTEM FOR ROBOTIC ASSEMBLY PARAMETER OPTIMIZATION**

VERFAHREN UND SYSTEM FÜR DIE ROBOTERANORDNUNGSPARAMETEROPTIMIERUNG

PROCÉDÉ ET SYSTÈME D'OPTIMISATION DES PARAMÈTRES D'UN ENSEMBLE ROBOTIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **09.01.2007 US 879483 P**

(43) Date of publication of application:
**11.11.2009 Bulletin 2009/46**

(73) Proprietor: **ABB Inc.
Norwalk, CT 06851 (US)**

(72) Inventors:
• **ZHANG, George
Windsor, CT 06095 (US)**
• **ZHANG, Hui
Shanghai 201206 (CN)**

• **HE, Jianmin
Redmond, WA 98052 (US)**
• **WANG, Jianjun
West Hartford, CT 06107 (US)**

(74) Representative: **Gregorj S.r.l.
Via L. Muratori, 13/b
20135 Milano (IT)**

(56) References cited:
**US-A1- 2002 056 181    US-A1- 2005 113 971**

• **ROUT ET AL: "Tolerance design of robot
parameters using Taguchi method" 1 November
2006 (2006-11-01), MECHANICAL SYSTEMS AND
SIGNAL PROCESSING, LONDON, GB, PAGE(S)
1832 - 1852 , XP005597330 ISSN: 0888-3270 the
whole document**

**Description**

CROSS REFERENCE TO RELATED APPLICATION

This application claims the priority of U.S. provisional patent application Ser. No. 60/879,483 filed on January 9, 2007, entitled "Method And System For Robotic Assembly Parameter Optimization" the contents of which are relied upon in their entirety, and the benefit of priority under 35 U.S.C. 119(e) is hereby claimed.

1. Field of the Invention

This invention relates to a robotic assembly process and optimization of the parameters of the robot.

2. Description of the Prior Art

Industrial robots with force control are used more and more in assembly applications in both the automotive and general industries. U.S. Patent Application Publication No. 2002056181 ("the '181 Published Application") and U.S. Patent Application Publication No. 2005113971 ("the '971 Published Application") both describe the use of an industrial robot with force control to perform tight-tolerance assembly tasks that cannot be performed by a conventional industrial robot with position control.

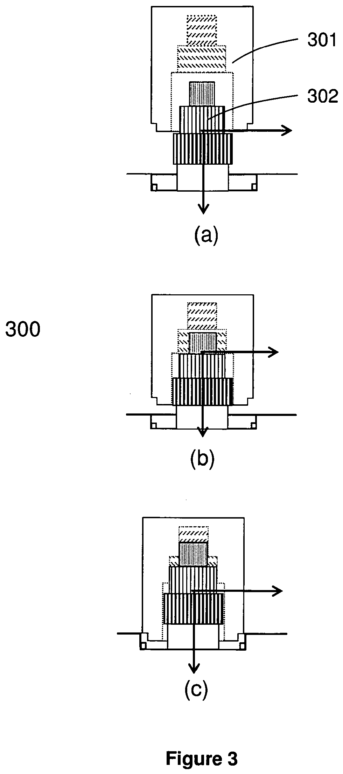

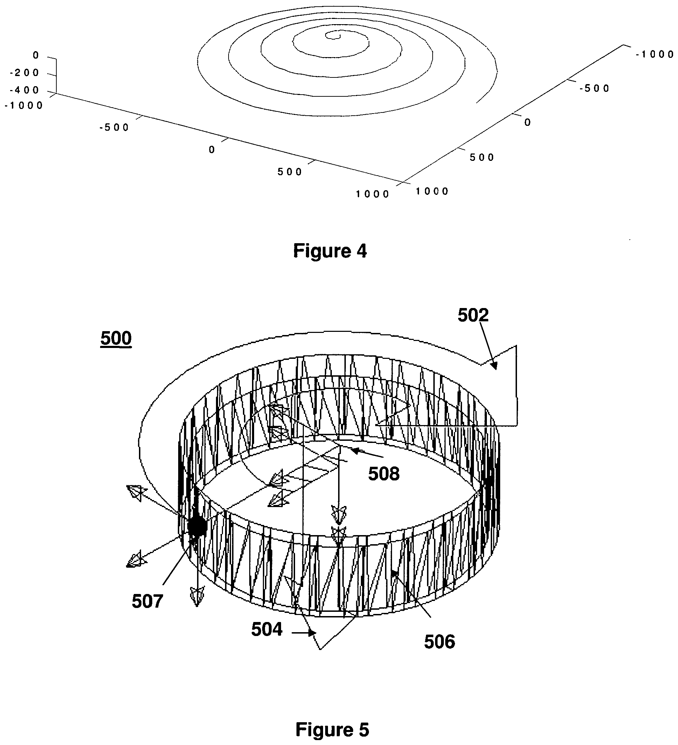

As is described in the '181 Published Application and with reference to Figs. 3a to 3d therein, a robot after being positioned at an approach start position for fitting a fitting part into a receiving part starts an approach operation to the received part under speed and force control. When the fitting part comes in contact with the receiving part and a reaction force thereof exceeds a threshold value set by parameter, it is determined that the fitting part comes in contact with the receiving part, and the procedure proceeds to a fitting operation. In the fitting operation, the fitting part is moved under speed and force control in accordance with the inserting/fitting direction. If the fitting operation does not progress for some reason and the movement stops in the middle of the fitting the fitting part is moved in a direction opposite to the inserting direction up to the approach start position under the speed and force control in accordance with the speed and the target force for the fitting operation to thereby draw the fitting part from the receiving part. Figs. 4a to 4c show the drawing of a fitted part from a receiving part. The set speed for the removal of the fitted part from the receiving part is under force control.

As is described in the '971 Published Application, an attraction force vector is superimposed on the force measured by a force sensor on the robot as a fitting part is moved toward a receiving part. The force vector can also be a repulsive force vector. After the robot end effector attracts contact with the surface on which the receiving part is located the force/torque values are converted into a velocity command value and parameters are designed for stable and gentle contact of the end effector with the surface to thereby minimize the contact force of the fitting part with the surface. A search velocity pattern in a plane parallel to the surface by the controller on the velocity command to the robot when the fitting part is in contact with the surface and the location of the receiving part is not known to the robot controller.

However, since the introduction of force control, in which the actual robot path depends not only on the programmed position but also on the interaction force between the assembled parts/components, the process of programming the robot has become more difficult. The optimal set of robotic (force control) parameters is often obtained either by trial and error or offline analysis tools. This parameter selection process is tedious and time consuming.

Summary of the Invention

A method for optimizing the parameters of a robot used in an assembly process to fit a fitting part in a receiving part. The method:

> categorizes the assembly process for the robot to fit the fitting part in the receiving part as one of a plurality of predetermined types of assembly processes;
> selecting said categorized assembly process from said predetermined types of assembly processes comprising cylindrical, radial and multi-stage insertion assembly processes;
> specifies from the categorized assembly process a search pattern for fitting the fitting part into the receiving part for the categorized assembly process and parameters for the categorized assembly process;
> obtains by using a predetermined Design of Experiment technique a set of optimal parameters for the categorized assembly process wherein the optimal parameters are selected from a set of tuning parameters that are based on the categorized assembly process;
> verifies that the set of optimal parameters meets a predetermined criteria to become the optimal parameters for using the robot to perform the categorized assembly process; and

causes the robot to perform the specified search pattern using the verified optimal parameters for the categorized assembly process to create an assembly that is a combination of the fitting and receiving parts.

A system for assembling a fitting part and a receiving part. The system has:

an industrial robot for assembling the fitting part and receiving part;
a computing device in communication with the robot, the computing device having therein program code usable by the computing device for optimizing the parameters of the robot during the assembly process. The program code has:

code configured to categorize the assembly process for the robot to fit the fitting part into the receiving part as one of a plurality of predetermined types of assembly processes;
code configured to select said categorized assembly process from said predetermined types of assembly processes comprising cylindrical, radial and multi-stage insertion assembly processes;
code configured to specify from the categorized assembly process a search pattern for fitting the fitting part into the receiving part for the categorized assembly process and parameters for the categorized assembly process;
code configured to obtain by using a predetermined Design of Experiment technique a set of optimal parameters for the categorized assembly process wherein the optimal parameters are selected from a set of tuning parameters that are based on the categorized assembly process; and
code configured to verify that the set of optimal parameters meets a predetermined criteria to become the optimal parameters for using the robot to perform the specified search pattern to create an assembly that is a combination of the fitting and receiving parts.

A computer program product for optimizing the parameters of controlling a robot used in an assembly process to fit a fitting part in a receiving part. The computer program product has:

computer program code configured to categorize the assembly process for the robot to fit the fitting part into the receiving part as one of a plurality of predetermined types of assembly processes;
computer program code configured to select said categorized assembly process from said predetermined types of assembly processes comprising cylindrical, radial and multi-stage insertion assembly processes;
computer program code configured to specify from the categorized assembly process a search pattern for fitting the fitting part into the receiving part for the categorized assembly process and parameters for the categorized assembly process;
computer program code configured to obtain by using a predetermined Design of Experiment technique a set of optimal parameters for the categorized assembly process wherein the optimal parameters are selected from a set of tuning parameters that are based on the categorized assembly process;
computer program code configured to verify that the set of optimal parameters meets a predetermined criteria to become the optimal parameters for using the robot to perform the categorized assembly process; and
computer program code configured to cause the robot to perform the specified search pattern using the verified optimal parameters for the categorized assembly process to create an assembly that is a combination of the fitting and receiving parts.

Description of the Drawing

Fig. 1 shows a flowchart for the robot assembly parameter optimization method of the present invention.
Fig. 2 illustrates an insertion process.
Fig. 3 illustrates the assembly of a torque converter as an example of a radial assembly process.
Fig. 4 shows the spiral searching pattern for cylindrical insertion.
Fig. 5 shows the combined search path for a radial type insertion.
Fig. 6 shows an example of a DOE process analysis diagram.
Fig. 7 shows an example of a DOE Analysis of variance diagram.
Fig. 8 shows the graphical user interface (GUI) for the main page of a computer program is one embodiment of the present invention.
Fig. 9 shows the GUI for the position setup page.
Fig. 10 shows the GUI for the set parameter page.
Fig. 11 shows the GUI for the tune parameter page.
Fig. 12 shows the GUI for the screening result page.

Fig. 13 shows the GUI for the Pareto plot page.
Fig. 14 shows the GUI for the optimization result page.
Fig. 15 shows the GUI for the main effect plot page.
Fig. 16 shows the GUI for the verification result page.
Fig. 17 shows the GUI for the assembly time distribution plot page.
Fig. 18 shows a system which may be used to implement the present invention.

Detailed Description

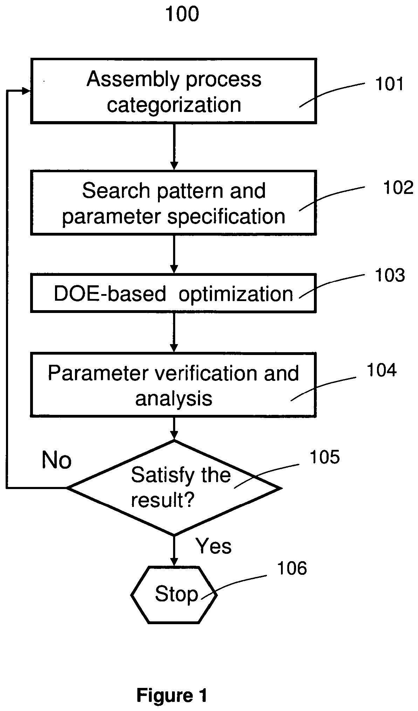

Referring now to Figure 1, there is shown a flowchart 100 for the method of the present invention for robotic assembly parameter optimization. The flowchart 100 has four action steps 101-104, each of which are described in more detail below, and a decision step 105. The first step 101 in the method is the assembly process categorization. The second step 102 is the search pattern and search parameter specification. The third step 103 is the Design Of Experiment (DOE) based optimization and the fourth step 104 is that of parameter set verification. If in step 105 the result is satisfied, such as the assembly cycle time and/or success rate meet the required values, the process stops at 106 otherwise another round of optimization may be performed. While Fig. 1 shows in step 103 a DOE based optimization and DOE based optimization is described hereinafter, it should be appreciated that DOE is only one example of an optimization type that can be used in the present invention. Therefore the description of DOE herein should not be used to limit the scope of the present invention.

In order to clearly describe the invention in detail, the following four subsections are included: 1) description of the assembly process categorization method; 2) description of the search pattern and parameter specification method; 3) description of the DOE-based parameter optimization method and system; 4) description of the result satisfaction criteria and second round optimization strategy; along with 5) a description of on-pendant parameter setup and optimization method and graphical user interface.

1) Description of the robotic assembly process categorization

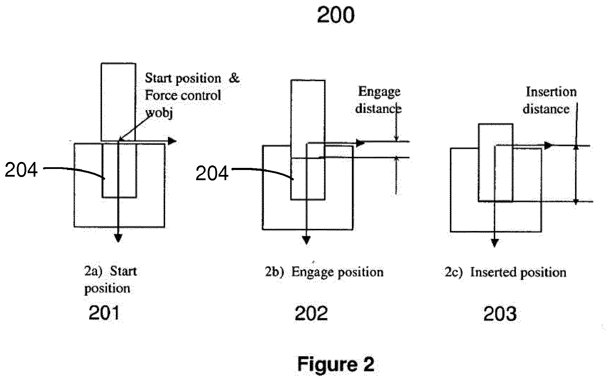

Robotic assembly processes are categorized based on their nature into cylindrical, radial and multi-stage insertion/assembly. As illustrated in Figures 2a to 2c, cylindrical insertion includes assembly applications with a cylinder and a smooth bore, such as transmission valve body assembly and piston stuffing. More specifically, Fig. 2a shows the start position of the assembly where the edge of cylinder 202 to be first inserted into smooth bore 204, hereinafter the leading edge, is positioned just above the opening of the bore 204. The assembly application proceeds to the engage position shown in Fig. 2b where the leading edge of cylinder 202 is inserted part way into the bore 204. The assembly application is finished when as is shown in Fig. 2c the leading edge of cylinder 202 is in the inserted position in smooth bore 204.

Radial insertion, which is not shown, includes assembly applications with a "toothed", "splined" or "gear" mesh, such as a forward clutch assembly and spline gear assembly. Multi-stage insertion, which can require any combination of cylindrical and radial insertions, includes assembly applications such as the assembly of a torque converter assembly 300 illustrated in Figs. 3a to 3c and half shaft assembly (not shown). The component 301 in Fig. 3 illustrates the assembly contact part of the torque converter that is held by the robot. The component 301 has gear teeth shown by the wavy lines which are to be mated to the teeth shown by the straight lines in the component 302 of the transmission shaft that is not held by the robot. Fig. 3a shows the relation between the assembled parts at starting time; Fig. 3b shows that the first gear set which is the largest in component 301 is engaged with the teeth in component 302; and Fig 3c shows that the second gear set is engaged with those teeth.

The cylindrical, radial and multi-stage insertion types can cover most of the real-world assembly applications. Additional insertion types can be defined if there is an assembly process that can not be described by the above types. For each insertion/assembly type, a certain search pattern is applied to perform the assembly process. There are robot force control parameters that are related to each search pattern. The next section describes the search pattern and specification of the related robot force control parameters.

2) Description of search pattern and robot parameter specification

It has been found that the type of assembly defines the assembly search pattern. In other words, different insertion types need different search patterns to accomplish the job. For example, in cylindrical insertion, a spiral searching pattern 400, one example of which is shown in Fig. 4, is identified as the major search pattern along with circular, rotation and Z-direction hopping patterns. The final force control search path is determined by the combination of all of the search patterns with their parameters. In radial insertion, the Z-direction rotation is the dominant search pattern along with the circular and Z-direction hopping pattern. In multi-stage insertion, search patterns used in radial insertion are applied for each of the multi stages. Besides the search pattern, the transition state between the search patterns and the combination of the patterns are also defined. All of those functions are represented by robotic assembly parameters.

There are two sets of assembly parameters in the system of the present invention. One set, called Set Parameter, is related to the search pattern transition, process action and insertion termination and is normally setup at the beginning of the robotic assembly engineering process. The Set Parameters are:

Insertion Distance - the distance between the insertion starting position and the end position (see Fig. 2c)
Engage Distance - the distance between the insertion starting position to the position where the parts are engaged (see Fig. 2b)
Time Limit - time limitation before a search process is terminated or re-performed
Max Num Try - maximum number of trials before an unsuccessful insertion is claimed
Use Timeout Act - a flag that signals whether or not to use a customer specified timeout handling method
TO Action Num - timeout handling routine number
Use Force Cond - a flag that signals whether or not to use force control insertion termination
Cond Force Value - condition force value used in force control insertion termination
Use IO Action - a flag that signals whether or not IO action is used at end of the insertion
IO Action Num - the IO number used in the action above
Use Force Retreat - a flag that signals whether or not the force control retreat is used
Retreat Force - the force value used in the force control retreat

Another set of the parameters, called Tune Parameters, are more related to the performance tuning of the robotic assembly process. Tune parameters are insertion/assembly type related and the initial values are setup at the beginning of the robotic assembly process. For a cylindrical insertion type, the parameters can be but are not limited to the following:

Search force - Max value of the searching/insertion force used in the tool Z direction
Spring Const - spring constant for the spring force used in the insertion
Spiral Speed - spiral searching speed in the X-Y plane of the tool frame
Spiral Radius - the maximum radius in which the spiral search is performed
Spiral Turn - the turn number in which the spiral search motion reaches its maximum radius
Circular Speed - the circular searching speed in the X-Y plane of the tool frame
Circular radius - the circular radius used in the insertion corresponding to the circular speed above
Force Amp - the amplitude of the hopping force in the Z direction of the tool frame
Force Period - the period of the hopping (oscillation) force

For radial type insertion, the tune parameters are:

Search force - Max value of the searching/insertion force used in the tool Z direction
Rotation Speed - the rotation speed used in the insertion around the tool Z axis
Rotation Angle - the maximum angle value used in the above rotation motion
Circular Speed - the circular searching speed in the X-Y plane of the tool frame
Circular Radius - the circular radius used in the insertion corresponding to the circular speed above
Force Amp - the amplitude of the hopping force in the Z direction of tool frame
Force Period - the period of the hopping (oscillation) force

The combination of the above parameterized force reference and the assembly contact force define the actual assembly path. An example of the radial type insertion reference path, that is the ideal path for radial insertion, is shown in Fig. 5. Reference path 500 has both a rotational component shown by the arrow 502 and an up and down components shown by the arrow 504. The zigzag lines 506 in Fig. 5 show the final path. Reference numeral 508 designates the center for the coordinate system and numeral 507 designates the robot tool center point that moves.

3) Description of the DOE-based parameter optimization method

DOE (Design Of Experiments) is a method that is used to find a set of optimal parameters symmetrically. Design of Experiments for Engineers and Scientists, Jiju Antony, Elsevier Butterworth-Heinemann, 2003 and Design and Analysis of Experiments, Sixth Edition, Douglas C. Montgomery, John Wiley & Son, Inc. 2005 introduces the basic DOE concept and analysis method and describes the formulation and calculation details for the DOE method.

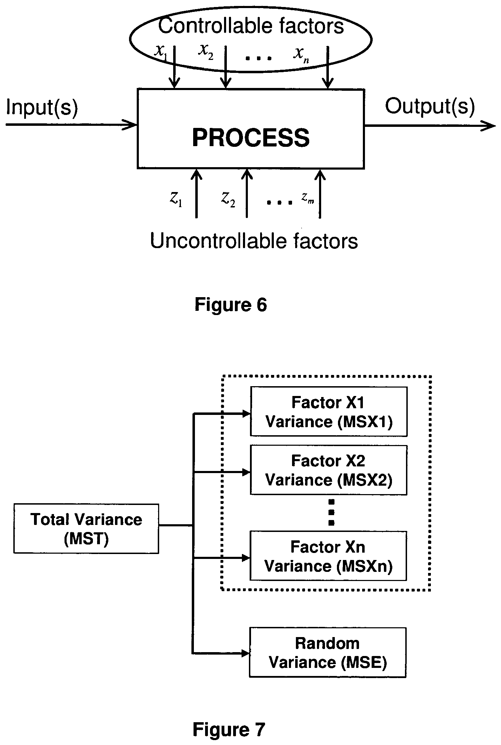

As illustrated in Figure 6, for a particular process, which can be any one of the processes described above, the controllable variables such as production batch are defined, the uncontrollable variables are ignored, the inputs are varied in a designed manner, and the output characteristics are measured. Normally, a fractional factorial test is used to find the most influential parameters first and then full factorial tests are used to result in a set of optimized parameters. In this robotic assembly parameter optimization, for example in the radial insertion type, the input parameters are *Search Force, Rotation Speed, Rotation Angle, Circular Speed, Circular Angle, Force Amp* and *Force Period.* The output variable is *Assembly Time.*

An experiment was performed using the method and system of the present invention. The data obtained from performing the experiment was analyzed using the DOE Analysis of Variance (ANOVA) method. A short description of the ANOVA method is given below along with the various screen shots, also described below, of a graphic user interface used in the experimental setup. The PB screening method, also described below, is first employed to identify the most influential of the input parameters.

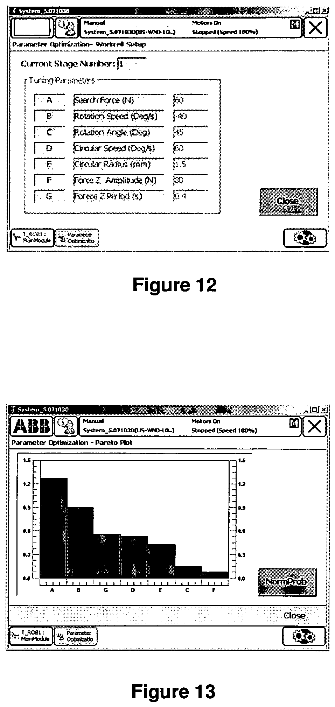

A Pareto plot named after the Italian scientist Vilfredo Pareto, shown in Figure 13, is used to show visually the influence of the input Tune Parameters. The Pareto plot is a way to present statistical data. The plot allows the detection of the factor and interaction effects that are most important to the process or design optimization study.

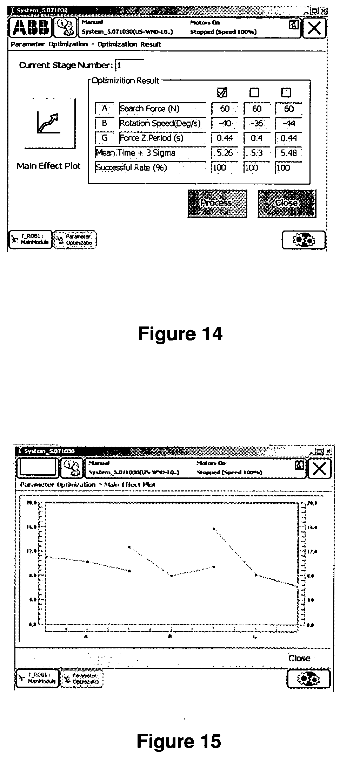

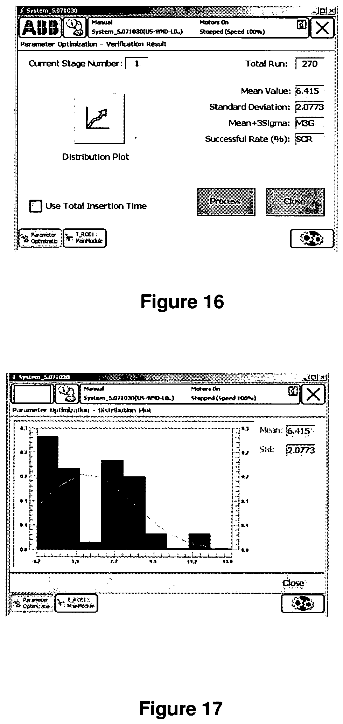

In the plot, A is the Search Force, B is the Rotation Speed, G is the Force Period, D is the Circular Speed, E is the Circular Radius, C is the Rotation Angle and F is the Force Amplitude. As is shown in Fig. 13, the three most influential input parameters are the A, B and G parameters. A full factorial test is used for optimizing the three most influential parameters. The main effect plot of Fig. 15 shows the trend of each of the three parameters A, B and G. Finally, experiments are run for the optimized parameter set repeatedly to find the statistical property of the assembly performance. If multiple trials are run to minimize the variation that is introduced by the manufacturing process in parameter screening, mean value of the assembly time is used in the analysis; and in parameter optimization, both mean value and mean value plus 3-sigma is used in the analysis to consider the effect of the variation. In addition, the success rate is calculated for each of all sets of the parameters. In the verification analysis, the assembly cycle time distribution is calculated and plotted as is shown in Figure 17.

*Analysis of Variance (ANOVA)*

Fig. 7 shows a DOE analysis of variance diagram. The total variance (MST) is the combination of the variances, MSX1 to MSXn respectively, of the factors XI to Xn shown in the dotted line in Fig. 7 and the random variance (MSE).

Suppose there are $\alpha$ levels of a single factor that are to be compared. The observed response from each of the $\alpha$ levels is a random variable. The data would be $y_{ij}$, representing the *j* th observation taken under factor level *i*. There will be, in general, *n* observations. Then:

$$ y_{ij} = \mu + \tau_i + \varepsilon_{ij} \begin{cases} i = 1,2,...,\alpha \\ j = 1,2,,...,n \end{cases} \qquad (3-1) $$

In this equation 3-1, $\mu$ is a parameter common to all levels called the overall mean, and $\tau_i$ is a parameter unique to the ith level called *i* th level effect. $\varepsilon_{ij}$ is a random error component that incorporates all other source of variability in the experiment.

Equation 3-1 is called the single-factor analysis of variance (ANOVA). If the design of the experiment is a completely randomized design, the objectives are to test appreciate hypotheses about the treatment means and to estimate them. For hypotheses testing, the model errors are assumed to be normally and independently distributed random variables with mean and zero and variance $\sigma^2$. The variance $\sigma^2$ is assumed to be constant for all levels of the factor. This implies the observations

$$ y_{ij} \sim N(\mu + \tau_i, \sigma^2) \qquad (3-2) $$

and that the observations are mutually independent.

*PB Screening Designs and Pareto plot*

P-B designs are named after their inventors R. L. Packett and J. P. Burman. These designs are based on Hadamard matrices in which the number of experiment runs is a multiple of four (4) i.e. N=4, 8, 12, 16 ... and so on, where N is the number of runs. The purpose of screening designs is to identify and separate out those factors that demand further investigation. The Pareto plot, one example of which is shown in the previously described Fig. 13, is as is shown in that figure a way to present statistical data.

*Normal distribution, mean and variance*

Normal distribution is the most important sampling distribution. If variable *y* is a normal random variable, its probability distribution will be a normal distribution.

$$f(y) = \frac{1}{\sigma\sqrt{2\pi}} e^{-(1/2)[(y-\mu)/\sigma]^2} \qquad\qquad (3-3)$$

where $-\infty < \mu < +\infty$ is the mean of the distribution and $\sigma^2 > 0$ is the variance.

4) Description of the result satisfaction criteria and optimization strategy

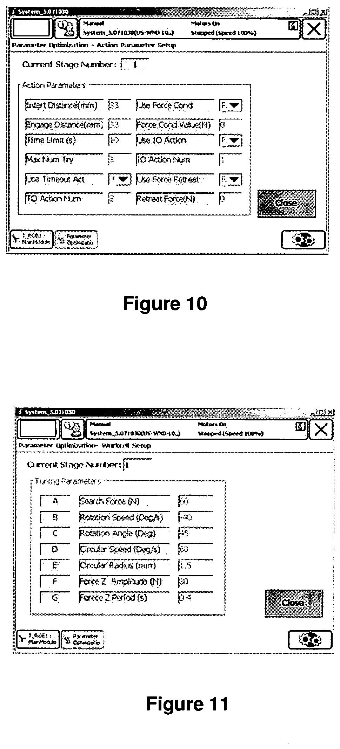

In the most influential parameter screening test, all parameters (for example the seven shown in Fig. 11 for radial type insertion) are screened. As is described above, the results of the screening are shown in the Pareto plot of Fig. 13. If multiple trials are conducted for the same test, the mean value is used in the screening analysis. Interactions among the parameters are not considered. Real-world applications showed that this assumption is valid for most of the assembly applications. In parameter optimization, the one (1) to three (3) most influential parameters and two (2) to five (5) levels, that is, amplitudes for the parameters were used. Fig. 14 shows one example of the parameter optimization in which the three most influential input parameters A, B and G identified in the Pareto plot of Fig. 13 are used with three levels. The main effect plot of Fig. 15 shows the trend of each of the three parameters. Figure 16 shows the results of the verification and Figure 17 shows for the verification results a plot of the assembly time distribution. If the overall result is not satisfied, then as is shown in the flowchart 100 of Fig. 1 other parameters can be used for the next round of optimization until the assembly cycle time goal is reached. If multiple trials are conducted for the same parameter set, both mean value and mean plus 3-Sigma as well as the success rate are considered in the optimal parameter set searching. 5) Description of the on-pendant parameter setup and optimization and graphical user interface.

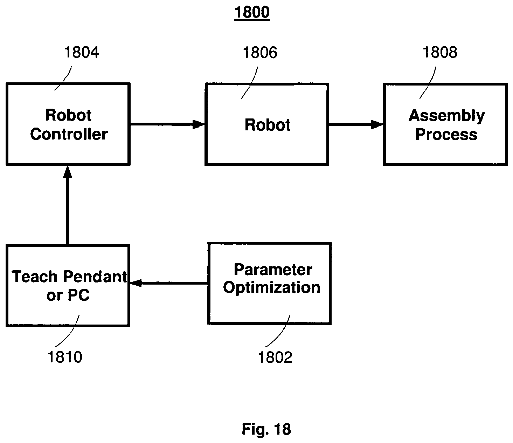

Fig, 18 shows a system that can be used to implement the present invention. While all robotic assembly parameters including resulting assembly cycle time are stored in and testing runs are performed by a robot controller such as controller 1804 of Fig. 18, the parameter optimization process is performed on the teach pendant 1810 of Fig. 18 in order to improve the time performance. A software routine is written to be executed in a micro processor in the robot teach pendant 1810.

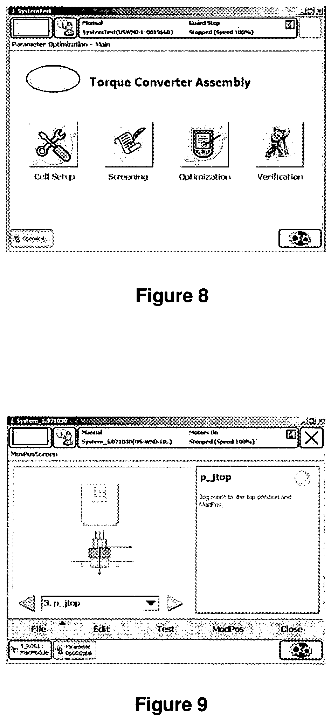

In addition, a graphic user interface (GUI) is developed to handle the testing variable setup, program execution, data analysis and result display. Figure 8 shows a main page of the user interface; Figure 9 shows the robot position setup page; Figures 10 and 11 illustrate the set and tune parameter setup pages. Figures 12 and 13 display the screening setup and result. Figures 14 and 15 display the optimization setup and result, and Figures 16 and 17 describe the parameter verification setup and result.

As will be appreciated by one of skill in the art, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system."

More specific examples (a non-exhaustive list) of the computer-readable medium would include: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device.

Computer program code for carrying out operations of the present invention may be written in an object oriented programming language such as Java, Smalltalk, C++, C# or the like, or may also be written in conventional procedural programming languages, such as the "C" programming language. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network (LAN) or a wide area network (WAN), or the connection may be made to an external computer (for example, through the Internet using an Internet Service Provider).

Referring now to Fig. 18, there is shown a system 1800 which may be used to implement the present invention. The system 1800 includes the method 1802 of Fig. 18 and 100 of Fig. 1 which may be resident, as described above, on a suitable media in a form that can be loaded into the robot controller 1804 for execution. Alternatively, the method can be loaded into the controller 1804 or may be downloaded into the controller 1804, as described above, by well known means from the same site where controller 1804 is located or at another site that is remote from the site where controller 1804 is located. As another alternative, the method 1802 may be resident in controller 1804 or the method 1802 may installed or loaded into a computing device, such as the teach pendant 1810 that as described above has a microprocessor or a PC, which is connected to controller 1804 to send commands to the controller 1804. The GUI described above would then be resident on the teach pendant 1810 or on the PC.

As can be appreciated by those of ordinary skill in the art, when the method is in controller 1804, the controller functions as a computing device to execute the method 1802. The controller 1804 is connected to robot 1806 which in turn is used to perform the assembly process 1808. Thus if the method 1802 is executed by controller 1804 or if the controller 1804 receives commands from a computing device such as teach pendant 1810 that executes the method 1802, the robot 1806 is controlled to perform the assembly process 1808 in accordance with the present invention. It should be appreciated that the method 1802 can be implemented on the robot controller 1804 as a software product, or implemented partly or entirely on a remote computer, which communicates with the robot controller 1804 via a communication network, such as, but not limited to, the Internet.

**Claims**

1. A method (100,1802) for optimizing the parameters of a robot (1806) used in an assembly process (1808) to fit a fitting part in a receiving part **characterized in that** it comprises the following steps:

   categorizing (101) said assembly process (1808) for said robot to fit said fitting part into said receiving part as one of a plurality of predetermined types of assembly processes;
   selecting said categorized assembly process (1808) from said predetermined types of assembly processes comprising cylindrical, radial and multi-stage insertion assembly processes;
   specifying (102) from said categorized assembly process (1808) a search pattern (500) for fitting said fitting part into said receiving part for said categorized assembly process (1808) and parameters for said categorized assembly process (1808);
   obtaining (103) by using a predetermined Design of Experiment technique a set of optimal parameters for said categorized assembly process (1808) wherein the optimal parameters are selected from a set of tune parameters that are based on the categorized assembly process (1808), wherein the predetermined Design of Experiment technique comprises:

   - defining controllable variables of said categorized assembly process and ignoring uncontrollable variables of said categorized assembly process;
   - varying input tune parameters in a designed manner and measuring output characteristics from said varying;
   - determining the most influential input tune parameters by using a fractional factorial test;
   - optimizing only the most influential input tune parameters by using a full factorial test;

   verifying (104) that said optimized input tune parameters meet a predetermined criteria to become the set of optimal parameters for using said robot (1806) to perform said categorized assembly process (1808); and
   causing said robot (1806) to perform said specified search pattern (500) using said set of optimal parameters for said categorized assembly process (1808) to create an assembly that is a combination of said fitting and receiving parts.

2. The method (100,1802) of claim 1 further comprising assembling said specified search pattern (500) from a plurality of search patterns (400) with a transition state between each of said plurality of patterns (400) and said parameters specified for said categorized assembly process (1808) comprising a set of parameters related to said search pattern transitions and the set of tune parameters related to the performance of said categorized assembly process (1808).

3. A system (1800) for assembling a fitting part and a receiving part **characterized in that** it comprises:

   an industrial robot (1806) for assembling said fitting part and receiving part;
   a computing device (1810) in communication with said robot(1806), said computing device(1810) having therein program code usable by said computing device (1810) for optimizing the parameters of said robot (1806) during said assembly process (1808), said program code comprising:

   code configured to categorize (101) said assembly process (1808) for said robot to fit said fitting part into said receiving part as one of a plurality of predetermined types of assembly processes;
code configured to select said categorized assembly process (1808) from said predetermined types of assembly processes comprising cylindrical;
code configured to specify (102) from said categorized assembly process (1808) a search pattern (500) for fitting said fitting part into said receiving part for said categorized assembly process (1808) and parameters for said categorized assembly process (1808);
code configured to obtain (103) by using a predetermined Design of Experiment technique a set of optimal parameters for said categorized assembly process (1808) wherein the optimal parameters are selected from a set of tune parameters that are based on the categorized assembly process (1808), wherein the predetermined Design of Experiment technique comprises:

- defining controllable variables of said categorized assembly process and ignoring uncontrollable variables of said categorized assembly process;
- varying input tune parameters in a designed manner and measuring output characteristics from said varying;
- determining the most influential input tune parameters by using a fractional factorial test;
- optimizing only the most influential input tune parameters by using a full factorial test; and

code configured to verify (104) that said optimized input tune parameters meet a predetermined criteria to become the optimal parameters for using said robot (1806) to perform said specified search pattern (500) to create an assembly that is a combination of said fitting and receiving parts.

4. The system (1800) of claim 3 further comprising a controller (1804) interposed between said computing device (1810) and said robot (1806), said controller (1804) causing said robot (1806) to perform said categorized assembly process (1808) using said set of optimal parameters for said categorized assembly process (1808).

5. The system (1800) of claim 3 wherein said computing device (1810) program code further comprises code configured to assemble said specified search pattern (500) from a plurality of search patterns (400) with a transition state between each of said plurality of patterns (400) and said parameters specified for said categorized assembly process (1808) comprise a set of parameters related to said search pattern transitions and the set of tune parameters related to the performance of said categorized assembly process (1808).

6. A computer program product for optimizing the parameters of controlling a robot (1806) used in an assembly process (1808) to fit a fitting part in a receiving part, said computer program product **characterized in that** it comprises:

computer program code configured to categorize (101) said assembly process (1808) for said robot to fit said fitting part into said receiving part as one of a plurality of predetermined types of assembly processes;
computer program code configured to select said categorized assembly process (1808) from said predetermined types of assembly processes comprising cylindrical, radial and multi-stage insertion assembly processes;
computer program code configured to specify (102) from said categorized assembly process (1808) a search pattern (500) for fitting said fitting part into said receiving part for said categorized assembly process (1808) and parameters for said categorized assembly process (1808);
computer program code configured to obtain (103) by using a predetermined Design of Experiment technique a set of optimal parameters for said categorized assembly process (1808) wherein the optimal parameters are selected from a set of tune parameters that are based on the categorized assembly process (1808), wherein the predetermined Design of Experiment technique comprises:

- defining controllable variables of said categorized assembly process and ignoring uncontrollable variables of said categorized assembly process;
- varying input tune parameters in a designed manner and measuring output characteristics from said varying;
- determining the most influential input tune parameters by using a fractional factorial test;
- optimizing only the most influential input tune parameters by using a full factorial test;

computer program code configured to verify (104) that said optimized input tune parameters meet a predetermined criteria to become the set of optimal parameters for using said robot (1806) to perform said categorized assembly process (1808); and
computer program code configured to cause said robot (1806) to perform said specified search pattern (500) using said set of optimal parameters for said categorized assembly process (1808) to create an assembly that is a combination of said fitting and receiving parts.

7. The computer program product of claim 6 further comprising computer program code configured to assemble said specified search pattern (500) from a plurality of search patterns (400) with a transition state between each of said plurality of patterns (400) and said parameters specified for said categorized assembly process (1808) comprising a set of parameters related to said search pattern transitions and the set of tune parameters related to the performance of said categorized assembly process (1808).

**Patentansprüche**

1. Verfahren (100, 1802) zum Optimieren der Parameter eines Roboters (1806), der in einem Zusammenbauvorgang (1808) verwendet wird, um ein Passteil in ein Aufnahmeteil einzupassen, **dadurch gekennzeichnet, dass** es die folgenden Schritte umfasst:

Kategorisieren (101) des Zusammenbauvorgangs (1808) für den Roboter, um das Passteil in das Aufnahmeteil einzupassen, als einer von mehreren vorbestimmten Arten von Zusammenbauvorgängen;
Auswählen des kategorisierten Zusammenbauvorgangs (1808) aus den vorbestimmten Arten von Zusammenbauvorgängen, die zylindrische, radiale und mehrstufige Einführzusammenbauvorgänge umfassen;
Spezifizieren (102) aus dem kategorisierten Zusammenbauvorgang (1808) eines Suchmusters (500) zum Einpassen des Passteils in das Aufnahmeteil für den kategorisierten Zusammenbauvorgang (1808) und von Parametern für den kategorisierten Zusammenbauvorgang (1808);
Erhalten (103), durch Verwenden einer vorbestimmten Technik einer statistischen Versuchsplanung, eines Satzes optimaler Parameter für den kategorisierten Zusammenbauvorgang (1808), wobei die optimalen Parameter aus einem Satz von Abstimmungsparametern ausgewählt werden, die auf dem kategorisierten Zusammenbauvorgang (1808) basieren, wobei die vorbestimmte Technik der statistischen Versuchsplanung Folgendes umfasst:

- Definieren steuerbarer Variablen des kategorisierten Zusammenbauvorgangs und Ignorieren nicht steuerbarer Variablen des kategorisierten Zusammenbauvorgangs;
- Variieren von Eingabeabstimmungsparametern in einer geplanten Weise und Messen von Ausgabemerkmalen aus dem Variieren;
- Bestimmen der einflussreichsten Eingabeabstimmungsparameter durch Verwenden eines Teilfaktortests;
- Optimieren nur der einflussreichsten Eingabeabstimmungsparameter durch Verwenden eines vollständigen Versuchstests;

Verifizieren (104), dass die optimierten Eingabeabstimmungsparameter ein vorbestimmtes Kriterium erfüllen, um der Satz optimaler Parameter für das Verwenden des Roboters (1806) zu werden, um den kategorisierten Zusammenbauvorgang (1808) durchzuführen; und
Veranlassen des Roboters (1806), das spezifizierte Suchmuster (500) unter Verwendung des Satzes optimaler Parameter für den kategorisierten Zusammenbauvorgang (1808) durchzuführen, um einen Zusammenbau zu erzeugen, der eine Kombination des Pass- und des Aufnahmeteils ist.

2. Verfahren (100, 1802) nach Anspruch 1, das ferner ein Zusammenbauen des spezifizierten Suchmusters (500) aus mehreren Suchmustern (400) mit einem Übergangszustand zwischen jedem der mehreren Muster (400) und den Parametern umfasst, die für den kategorisierten Zusammenbauvorgang (1808) spezifiziert sind, die einen Satz von Parametern, die sich auf die Suchmusterübergänge beziehen, und den Satz von Abstimmungsparametern umfassen, die sich auf die Leistung des kategorisierten Zusammenbauvorgangs (1808) beziehen.

3. System (1800) zum Zusammenbauen eines Passteils und eines Aufnahmeteils, **dadurch gekennzeichnet, dass** es Folgendes umfasst:

einen Industrieroboter (1806) zum Zusammenbauen des Passteils und des Aufnahmeteils;
eine Rechenvorrichtung (1810) in Kommunikation mit dem Roboter (1806), wobei die Rechenvorrichtung (1810) einen Programmcode darin aufweist, der durch die Rechenvorrichtung (1810) zum Optimieren der Parameter des Roboters (1806) während des Zusammenbauvorgangs (1808) verwendbar ist, wobei der Programmcode Folgendes umfasst:

Code, der konfiguriert ist, um den Zusammenbauvorgang (1808) für den Roboter zu kategorisieren (101), um das Passteil in das Aufnahmeteil als eine von mehreren vorbestimmten Arten von Zusammenbauvorgängen einzupassen;

Code, der konfiguriert ist, um den kategorisierten Zusammenbauvorgang (1808) aus den vorbestimmten Arten von Zusammenbauvorgängen auszuwählen, die zylindrisch umfassen;

Code, der konfiguriert ist, um aus dem kategorisierten Zusammenbauvorgang (1808) ein Suchmuster (500) zum Einpassen des Passteils in das Aufnahmeteil für den kategorisierten Zusammenbauvorgang (1808) und Parameter für den kategorisierten Zusammenbauvorgang (1808) zu spezifizieren (102);

Code, der konfiguriert ist, um, durch Verwenden einer vorbestimmten Technik der statistischen Versuchsplanung, einen Satz optimaler Parameter für den kategorisierten Zusammenbauvorgang (1808) zu erhalten (103), wobei die optimalen Parameter aus einem Satz von Abstimmungsparametern ausgewählt werden, die auf dem kategorisierten Zusammenbauvorgang (1808) basieren, wobei die vorbestimmte Technik der statistischen Versuchsplanung Folgendes umfasst:

- Definieren steuerbarer Variablen des kategorisierten Zusammenbauvorgangs und Ignorieren nicht steuerbarer Variablen des kategorisierten Zusammenbauvorgangs;
- Variieren von Eingabeabstimmungsparametern in einer geplanten Weise und Messen von Ausgabemerkmalen aus dem Variieren;
- Bestimmen der einflussreichsten Eingabeabstimmungsparameter durch Verwenden eines Teilfaktortests;
- Optimieren nur der einflussreichsten Eingabeabstimmungsparameter durch Verwenden eines vollständigen Versuchstests; und

Code, der konfiguriert ist, um zu verifizieren (104), dass die optimierten Eingabeabstimmungsparameter ein vorbestimmtes Kriterium erfüllen, um die optimalen Parameter für das Verwenden des Roboters (1806) zu werden, um das spezifizierte Suchmuster (500) durchzuführen, um einen Zusammenbau zu erstellen, der eine Kombination aus dem Pass- und dem Aufnahmeteil ist.

4. System (1800) nach Anspruch 3, das ferner eine Steuerung (1804) umfasst, die zwischen der Rechenvorrichtung (1810) und dem Roboter (1806) zwischengeschaltet ist, wobei die Steuerung (1804) den Roboter (1806) veranlasst, den kategorisierten Zusammenbauvorgang (1808) unter Verwendung des Satzes optimaler Parameter für den kategorisierten Zusammenbauvorgang (1808) durchzuführen.

5. System (1800) nach Anspruch 3, wobei der Programmcode der Rechenvorrichtung (1810) ferner einen Code umfasst, der konfiguriert ist, um das spezifizierte Suchmuster (500) aus mehreren Suchmustern (400) mit einem Übergangszustand zwischen jedem der mehreren Muster (400) und den Parametern zusammenzubauen, die für den kategorisierten Zusammenbauvorgang (1808) spezifiziert sind, die einen Satz von Parametern, die sich auf die Suchmusterübergänge beziehen, und den Satz von Abstimmungsparametern umfassen, die sich auf die Leistung des kategorisierten Zusammenbauvorgangs (1808) beziehen.

6. Computerprogrammprodukt zum Optimieren der Parameter eines Steuerns eines Roboters (1806), der in einem Zusammenbauvorgang (1808) verwendet wird, um ein Passteil in ein Aufnahmeteil einzupassen, wobei das Computerprogrammprodukt **dadurch gekennzeichnet ist, dass** es Folgendes umfasst:

Computerprogrammcode, der konfiguriert ist, um den Zusammenbauvorgang (1808) für den Roboter zu kategorisieren (101), um das Passteil als eine von mehreren vorbestimmten Arten von Zusammenbauvorgängen in das Aufnahmeteil einzupassen;

Computerprogrammcode, der konfiguriert ist, um den kategorisierten Zusammenbauvorgang (1808) aus den vorbestimmten Arten von Zusammenbauvorgängen auszuwählen, die zylindrische, radiale und mehrstufige Einführzusammenbauvorgänge umfassen;

Computerprogrammcode, der konfiguriert ist, um aus dem kategorisierten Zusammenbauvorgang (1808) ein Suchmuster (500) zum Einpassen des Passteils in das Aufnahmeteil für den kategorisierten Zusammenbauvorgang (1808) und Parameter für den kategorisierten Zusammenbauvorgang (1808) zu spezifizieren (102);

Computerprogrammcode, der konfiguriert ist, um durch Verwenden einer vorbestimmten Technik der statistischen Versuchsplanung einen Satz optimaler Parameter für den kategorisierten Zusammenbauvorgang (1808) zu erhalten (103), wobei die optimalen Parameter aus einem Satz von Abstimmungsparametern ausgewählt werden, die auf dem kategorisierten Zusammenbauvorgang (1808) basieren, wobei die vorbestimmte Technik der statistischen Versuchsplanung Folgendes umfasst:

- Definieren steuerbarer Variablen des kategorisierten Zusammenbauvorgangs und Ignorieren nicht steuerbarer Variablen des kategorisierten Zusammenbauvorgangs;
- Variieren von Eingabeabstimmungsparametern in einer geplanten Weise und Messen von Ausgabemerkmalen aus dem Variieren;
- Bestimmen der einflussreichsten Eingabeabstimmungsparameter durch Verwenden eines Teilfaktortests;
- Optimieren nur der einflussreichsten Eingabeabstimmungsparameter durch Verwenden eines vollständigen Versuchstests;

Computerprogrammcode, der konfiguriert ist, um zu verifizieren (104), dass die optimierten Eingabeabstimmungsparameter ein vorbestimmtes Kriterium erfüllen, um der Satz optimaler Parameter für das Verwenden des Roboters (1806) zu werden, um den kategorisierten Zusammenbauvorgang (1808) durchzuführen; und Computerprogrammcode, der konfiguriert ist, um den Roboter (1806) zu veranlassen, das spezifizierte Suchmuster (500) unter Verwendung des Satzes optimaler Parameter für den kategorisierten Zusammenbauvorgang (1808) durchzuführen, um einen Zusammenbau zu erzeugen, der eine Kombination des Pass- und des Aufnahmeteils ist.

7. Computerprogrammprodukt nach Anspruch 6, das ferner einen Computerprogrammcode umfasst, der konfiguriert ist, um das spezifizierte Suchmuster (500) aus mehreren Suchmustern (400) mit einem Übergangszustand zwischen jedem der mehreren Muster (400) und den Parametern zusammenzubauen, die für den kategorisierten Zusammenbauvorgang (1808) spezifiziert sind, die einen Satz von Parametern, die sich auf die Suchmusterübergänge beziehen, und den Satz von Abstimmungsparametern umfassen, die sich auf die Leistung des kategorisierten Zusammenbauvorgangs (1808) beziehen.

## Revendications

1. Procédé (100, 1802) destiné à optimiser les paramètres d'un robot (1806) utilisé dans un processus d'assemblage (1808) pour ajuster une pièce ajustée dans une pièce réceptrice, **caractérisé en ce qu'**il comprend les étapes suivantes :

la catégorisation (101) dudit processus d'assemblage (1808) pour ledit robot afin d'ajuster ladite pièce ajustée dans ladite pièce réceptrice comme l'un d'une pluralité de types prédéterminés de processus d'assemblage ;
la sélection dudit processus d'assemblage catégorisé (1808) parmi lesdits types prédéterminés de processus d'assemblage comprenant des processus d'assemblage d'insertion cylindrique, radiale et à plusieurs étages ;
la spécification (102), à partir dudit processus d'assemblage catégorisé (1808), d'un motif de recherche (500) afin d'ajuster ladite pièce ajustée dans ladite pièce réceptrice pour ledit processus d'assemblage catégorisé (1808) et des paramètres pour ledit processus d'assemblage catégorisé (1808) ;
l'obtention (103), à l'aide d'une technique de plan d'expérience prédéterminée, d'un ensemble de paramètres optimaux pour ledit processus d'assemblage catégorisé (1808) dans lequel les paramètres optimaux sont sélectionnés à partir d'un ensemble de paramètres de réglages qui sont basés sur le processus d'assemblage catégorisé (1808), la technique de plan d'expérience prédéterminée comprenant :

- la définition des variables contrôlables dudit processus d'assemblage catégorisé et le fait d'ignorer les variables incontrôlables dudit processus d'assemblage catégorisé ;
- la variation des paramètres de réglages d'entrée de manière nominale et la mesure des caractéristiques de sortie à partir de ladite variation ;
- la détermination des paramètres de réglages d'entrée les plus influents à l'aide d'un test factoriel fractionnaire ;
- l'optimisation uniquement des paramètres de réglages d'entrée les plus influents à l'aide d'un test factoriel complet ;

la vérification (104) que lesdits paramètres de réglages d'entrée optimisés répondent à un critère prédéterminé pour devenir l'ensemble de paramètres optimaux afin d'utiliser ledit robot (1806) pour exécuter ledit processus d'assemblage catégorisé (1808) ; et
le fait d'amener ledit robot (1806) à exécuter ledit motif de recherche spécifié (500) à l'aide dudit ensemble de paramètres optimaux pour ledit processus d'assemblage catégorisé (1808) afin de créer un assemblage qui est une combinaison desdites pièces ajustée et réceptrice.

**2.** Procédé (100, 1802) selon la revendication 1, comprenant en outre l'assemblage dudit motif de recherche spécifié (500) à partir d'une pluralité de motifs de recherche (400) avec un état de transition entre chacun de ladite pluralité de motifs (400) et lesdits paramètres spécifiés pour ledit processus d'assemblage catégorisé (1808) comprenant un ensemble de paramètres liés auxdites transitions de motif de recherche et l'ensemble de paramètres de réglages liés à la performance dudit processus d'assemblage catégorisé (1808).

**3.** Système (1800) d'assemblage d'une pièce ajustée et d'une pièce réceptrice, **caractérisé en ce qu'**il comprend :

un robot industriel (1806) pour assembler lesdites pièces ajustée et réceptrice ;
un dispositif informatique (1810) en communication avec ledit robot (1806), ledit dispositif informatique (1810) contenant code de programme utilisable par ledit dispositif informatique (1810) pour optimiser les paramètres dudit robot (1806) pendant ledit processus d'assemblage (1808), ledit code de programme comprenant :

code configuré pour catégoriser (101) ledit processus d'assemblage (1808) pour que ledit robot ajuste ladite pièce ajustée dans ladite pièce réceptrice comme l'un d'une pluralité de types prédéterminés de processus d'assemblage ;
code configuré pour sélectionner ledit processus d'assemblage catégorisé (1808) parmi lesdits types prédéterminés de processus d'assemblage comprenant l'insertion cylindrique ;
code configuré pour spécifier (102), à partir dudit processus d'assemblage catégorisé (1808), un motif de recherche (500) afin d'ajuster ladite pièce ajustée dans ladite pièce réceptrice pour ledit processus d'assemblage catégorisé (1808) et des paramètres pour ledit processus d'assemblage catégorisé (1808) ;
code configuré pour obtenir (103), à l'aide d'une technique de plan d'expérience prédéterminée, un ensemble de paramètres optimaux pour ledit processus d'assemblage catégorisé (1808) dans lequel les paramètres optimaux sont sélectionnés à partir d'un ensemble de paramètres de réglages qui sont basés sur le processus d'assemblage catégorisé (1808), la technique de plan d'expérience prédéterminée comprenant :

- la définition des variables contrôlables dudit processus d'assemblage catégorisé et le fait d'ignorer les variables incontrôlables dudit processus d'assemblage catégorisé ;
- la variation des paramètres de réglages d'entrée de manière nominale et la mesure des caractéristiques de sortie à partir de ladite variation ;
- la détermination des paramètres de réglages d'entrée les plus influents à l'aide d'un test factoriel fractionnaire ;
- l'optimisation uniquement des paramètres de réglages d'entrée les plus influents à l'aide d'un test factoriel complet ; et

code configuré pour vérifier (104) que lesdits paramètres de réglages d'entrée optimisés répondent à un critère prédéterminé afin de devenir les paramètres optimaux pour utiliser ledit robot (1806) pour exécuter ledit modèle de recherche spécifié (500) pour créer un ensemble qui est une combinaison desdites pièces ajustée et réceptrice.

**4.** Système (1800) selon la revendication 3, comprenant en outre un dispositif de commande (1804) interposé entre ledit dispositif informatique (1810) et ledit robot (1806), ledit dispositif de commande (1804) amenant ledit robot (1806) à exécuter ledit processus d'assemblage catégorisé (1808) à l'aide dudit ensemble de paramètres optimaux pour ledit processus d'assemblage catégorisé (1808).

**5.** Système (1800) selon la revendication 3, dans lequel ledit code de programme de dispositif informatique (1810) comprend en outre code configuré pour assembler ledit motif de recherche spécifié (500) à partir d'une pluralité de motifs de recherche (400) avec un état de transition entre chacun de ladite pluralité de motifs (400) et lesdits paramètres spécifiés pour ledit processus d'assemblage catégorisé (1808) comprennent un ensemble de paramètres liés auxdites transitions de motif de recherche et l'ensemble de paramètres de réglages liés à la performance dudit processus d'assemblage catégorisé (1808).

**6.** Produit de programme informatique pour optimiser les paramètres de commande d'un robot (1806) utilisé dans un processus d'assemblage (1808) afin d'ajuster une pièce ajustée dans une pièce réceptrice, ledit produit de programme informatique **caractérisé en ce qu'**il comprend :

code de programme informatique configuré pour catégoriser (101) ledit processus d'assemblage (1808) afin que ledit robot ajuste ladite pièce ajustée dans ladite pièce réceptrice comme l'un d'une pluralité de types prédéterminés de processus d'assemblage ;

code de programme informatique configuré pour sélectionner ledit processus d'assemblage catégorisé (1808) parmi lesdits types prédéterminés de processus d'assemblage comprenant des processus d'assemblage d'insertion cylindrique, radiale et à plusieurs étages ;

code de programme informatique configuré pour spécifier (102), à partir dudit processus d'assemblage catégorisé (1808), un motif de recherche (500) afin d'ajuster ladite pièce ajustée dans ladite pièce réceptrice pour ledit processus d'assemblage catégorisé (1808) et des paramètres pour ledit processus d'assemblage catégorisé (1808) ;

code de programme informatique configuré pour obtenir (103), à l'aide d'une technique de plan d'expérience prédéterminée, un ensemble de paramètres optimaux pour ledit processus d'assemblage catégorisé (1808) dans lequel les paramètres optimaux sont sélectionnés à partir d'un ensemble de paramètres de réglages qui sont basés sur le processus d'assemblage catégorisé (1808), la technique de plan d'expérience prédéterminée comprenant :

- la définition des variables contrôlables dudit processus d'assemblage catégorisé et le fait d'ignorer les variables incontrôlables dudit processus d'assemblage catégorisé ;
- la variation des paramètres de réglages d'entrée de manière nominale et la mesure des caractéristiques de sortie à partir de ladite variation ;
- la détermination des paramètres de réglages d'entrée les plus influents à l'aide d'un test factoriel fractionnaire ;
- l'optimisation uniquement des paramètres de réglages d'entrée les plus influents à l'aide d'un test factoriel complet ;

code de programme informatique configuré pour vérifier (104) que lesdits paramètres de réglages d'entrée optimisés répondent à un critère prédéterminé afin de devenir l'ensemble de paramètres optimaux pour utiliser ledit robot (1806) pour exécuter ledit processus d'assemblage catégorisé (1808) ; et

code de programme informatique configuré pour amener ledit robot (1806) à exécuter ledit motif de recherche spécifié (500) à l'aide dudit ensemble de paramètres optimaux pour ledit processus d'assemblage catégorisé (1808) afin de créer un assemblage qui est une combinaison desdites pièces ajustée et réceptrice.

7. Produit de programme informatique selon la revendication 6, comprenant en outre code de programme informatique configuré pour assembler ledit motif de recherche spécifié (500) à partir d'une pluralité de motifs de recherche (400) avec un état de transition entre chacun de ladite pluralité de motifs (400) et lesdits paramètres spécifiés pour ledit processus d'assemblage catégorisé (1808) comprenant un ensemble de paramètres liés auxdites transitions de motif de recherche et l'ensemble de paramètres de réglages liés à la performance dudit processus d'assemblage catégorisé (1808).

100

Figure 1

200

204

Start position &
Force control
wobj

204

Engage
distance

Insertion
distance

2a) Start
position

201

2b) Engage position

202

2c) Inserted position

203

**Figure 2**

(a)

300

(b)

(c)

**Figure 3**

**Figure 4**

**Figure 5**

Figure 6

Figure 7

**Figure 8**

**Figure 9**

**Figure 10**

**Figure 11**

EP 2 114 631 B1

Figure 12

Figure 13

22

**Figure 14**

**Figure 15**

Figure 16

Figure 17

<u>1800</u>

1804     1806     1808

```
┌──────────────┐      ┌──────────────┐      ┌──────────────┐
│    Robot     │ ───▶ │    Robot     │ ───▶ │   Assembly   │
│  Controller  │      │              │      │   Process    │
└──────────────┘      └──────────────┘      └──────────────┘
       ▲
       │
┌──────────────┐      ┌──────────────┐
│Teach Pendant │ ◀─── │  Parameter   │
│    or PC     │      │ Optimization │
└──────────────┘      └──────────────┘

      1810                  1802
```

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 60879483 B
- US 2002056181
- US 2005113971

### Non-patent literature cited in the description

- **JIJU ANTONY.** Design of Experiments for Engineers and Scientists. Elsevier Butterworth-Heinemann, 2003
- **DOUGLAS C. MONTGOMERY.** Design and Analysis of Experiments. John Wiley & Son, Inc, 2005